# EUROPÄISCHE PATENTSCHRIFT

(11) **EP 1 312 489 B1**
(45) Veröffentlichungstag und Bekanntmachung des Hinweises auf die Patenterteilung: **31.05.2006**
(21) Anmeldenummer: 02020215.6
(22) Anmeldetag: 10.09.2002
(51) Int. Cl.: B60C 7/24, B60B 25/00

(54) **Fahrzeugrad mit einer Felge und einem Vollgummireifen**
Vehicle wheel with rim and solid tyre
Roue de véhicule à jante et pneu à bandage solide

(30) Priorität: 15.11.2001 DE 10156183
(43) Veröffentlichungstag der Anmeldung: 21.05.2003
(73) Patentinhaber: Continental Aktiengesellschaft, 30165 Hannover (DE)
(72) Erfinder: Sauerwald, Hans-Jürgen, 59955 Winterberg 12 (DE); Scholz, Klaus, 34497 Korbach (DE)

(56) Entgegenhaltungen:
- DE-A- 1 930 277
- DE-A- 2 813 213
- DE-C- 190 743
- GB-A- 191 407 250

## Beschreibung

Die Erfindung betrifft ein Fahrzeugrad mit einer Felge, die eine äußere Sitzfläche aufweist, und mit einem auf der Felge positionierten Vollgummireifen.

Ein derartiges Fahrzeugrad ist aus der DE-C-28 13 213 bekannt. Der Vollgummireifen weist einen umlaufenden Vorsprung auf, der in eine Vertiefung des Felgenkörpers eingreift. Die Fixierung des Vollgummireifens an der Felge soll dabei ausschließlich durch Formschluss zwischen dem Vollgummireifen einerseits und dem Felgenkörper andererseits herbeigeführt werden, indem der Vorsprung des Vollgummireifens in der Lage ist, sich selbst in der an und für sich für einen Seitenring vorgesehenen Vertiefung des Felgenkörpers fest zu halten. Die Montage und Demontage des Reifens sind nur unter Zuhilfenahme einer Montagepresse möglich.

Bei anderen bekannten Ausführungen, beispielsweise bei jener gemäß DE-A-19 30 277, ist eine geteilte Radfelge für den Vollgummireifen vorgesehen, die einen Seitenring und einen diesen gegen Axialverschiebungen sichernden, in eine Ringnut am Außenumfang des Felgenkörpers einsetzbaren Sprengring aufweist.

Dokument GB 19140725 offenbart ein Fahrzeugrad gemäß dem Oberbegriff des Anspruchs 1.

Der Erfindung liegt die Aufgabe zu Grunde, ein Fahrzeugrad der eingangs genannten Art derart auszuführen, dass die Montage und die Demontage des Vollgummireifens ohne den Einsatz von Montagepressen möglich sind. Gleichzeitig soll ein fester Sitz des Reifens auf der Felge auch unter hohen Umfangs- und Axialbelastungen sichergestellt sein.

Gelöst wird die gestellte Aufgabe erfindungsgemäß dadurch, dass auf der Felge eine aus Segmenten zusammengesetzte, am äußeren Umfang eine Keilfläche aufweisende Keil - Unterschale gehalten ist, welche gegen eine gegengleich ausgeführte Keilfläche einer Keil - Oberschale, die mit dem Reifen fest verbunden ist, unter Komprimieren einer zwischen der Felgensitzfläche und der Innenseite der Keil - Unterschale angeordneten Kompressionszwischenlage verspannt ist.

Gemäß der Erfindung ist daher vorgesehen, die Fixierung des Reifens auf der Felge mittels gegengleich ausgeführter Keilflächen durchzuführen, wodurch die zur Montage erforderlichen Kräfte so weit reduziert werden können, dass keine Montagepresse mehr erforderlich ist. Von besonderer Bedeutung ist dabei die Funktion der Kompressionszwischenlage, deren Kompression die Verkeilung der Keil - Oberschale und der Keil - Unterschale ohne allzu hohen Kraftaufwand unterstützt und gleichzeitig einen optimalen Sitz des Reifens auch unter hohen Umfangs- und Axialbelastungen gewährleistet.

Die Erfindung ist nicht an bestimmte Ausführungen von Felgen gebunden. Ist die Felge bereits mit Halteelementen, beispielsweise einer Vertiefung und/ oder einem Felgenhorn, versehen, die üblicherweise zum unmittelbaren Halten des Reifens vorgesehen sind, so können diese Halteelemente auch dafür eingesetzt werden, die Keil - Unterschale an der Felge in Axialrichtung zu fixieren.

Für die Rundlaufeigenschaften des Rades ist es ferner günstig, wenn bei montiertem Reifen die Segmente der Keil - Unterschale einen geschlossenen Ringkörper bilden.

Das Hantieren bei der Montage des Reifens wird erleichtert, wenn die Segmente der Keil - Unterschale vor der Montage des Reifens mittels eines an ihrem äußeren Umfang positionierten Halteelementes, beispielsweise eines Haltegummis, an der Felge gehalten werden.

Die Verbindung der Keil - Oberschale zum Reifen erfolgt zweckmäßigerweise durch Anvulkanisieren.

Eine zwischen der Keil - Oberschale und dem Reifen eingebrachte metallische Verstärkung kann die Keil - Oberschale, insbesondere wenn diese aus Kunststoff besteht, vor Überlastung bei der Montage und der Demontage schützen.

Auf eine einfache und wenig kraftaufwändige Weise lässt sich die Keil - Oberschale mit der Keil - Unterschale durch Spannschrauben verbinden.

Eine besonders einfache Montage ist dabei bei einer Ausführung möglich, bei der sowohl die Keil - Unterschale als auch die Keil - Oberschale Aufnahmebohrungen zur Aufnahme der Spannschrauben aufweisen, deren Anordnung und Ausführung ein Einführen der Spannschrauben bei nicht komprimierter Kompressionszwischenlage und ein Spannen der Schrauben zum Ziehen der Keil - Oberschale in ihre Endposition unter Komprimieren der Zwischenlage gestatten.

Es brauchen zur Montage lediglich die Spannschrauben betätigt zu werden, wenn in den Aufnahmebohrungen der Keil - Unterschale bereits Spannmuttern eingebracht sind.

Zur Demontage des Reifens von der Felge werden die Spannschrauben wieder entfernt. Um dabei in jedem Fall ein Lösen der Verkeilung der beiden Schalen sicher zu stellen, können gesonderte Maßnahmen getroffen werden. So können beispielsweise in der Keil - Oberschale und in der Keil - Unterschale weitere miteinander fluchtend angeordnete Bohrungen ausgebildet sein, wobei die Bohrungen in der Keil - Oberschale mit einem Innengewinde versehen sind und die Bohrungen in der Keil - Unterschale Senkbohrungen sind, sodass mittels in die Bohrungen eingesetzter Schrauben an Abdrücken der Keil - Oberschale von der Keil - Unterschale erfolgt.

Die beiden Schalen lassen sich auf einfache Weise aus Kunststoff in einem Spritzgussverfahren herstellen. Die beiden Schalen können jedoch auch aus anderen Werkstoffen, beispielsweise aus Metall bestehen.

Die beiden Schalen sind grundsätzlich miteinander durch Kraftschluss, die Verkeilung, verbunden. Zusätzlich kann auch vorgesehen sein, die Keil - Unterschale und die Keil - Oberschale miteinander formschlüssig, beispielsweise durch Nutführungen, zu verbinden.

Weitere Merkmale, Vorteile und Einzelheiten der Erfindung werden nun anhand der Zeichnung, die ein Ausführungsbeispiel darstellt, näher beschrieben. Dabei zeigen
Fig. 1 einen Querschnitt durch ein erfindungsgemäß ausgeführtes Fahrzeugrad, die untere Hälfte in einer Position während der Montage des Reifens, die obere Hälfte mit montiertem Reifen, und
Fig. 2 einen Schnitt durch eine Demontagehilfe.

Das Fahrzeugrad besteht aus einem Vollgummireifen 1 und einer metallischen Felge 2, die herkömmlich ausgeführt sein kann und in bekannter Weise an ihrem einen seitlichen Rand mit einem umlaufenden Felgenhorn 3 und an ihrem zweiten Rand mit einer umlaufenden Nut 4 versehen sein kann. Zwischen dem Felgenhorn 3 und der Nut 4 ist die Felge 2 mit einer äußeren Sitzfläche versehen.

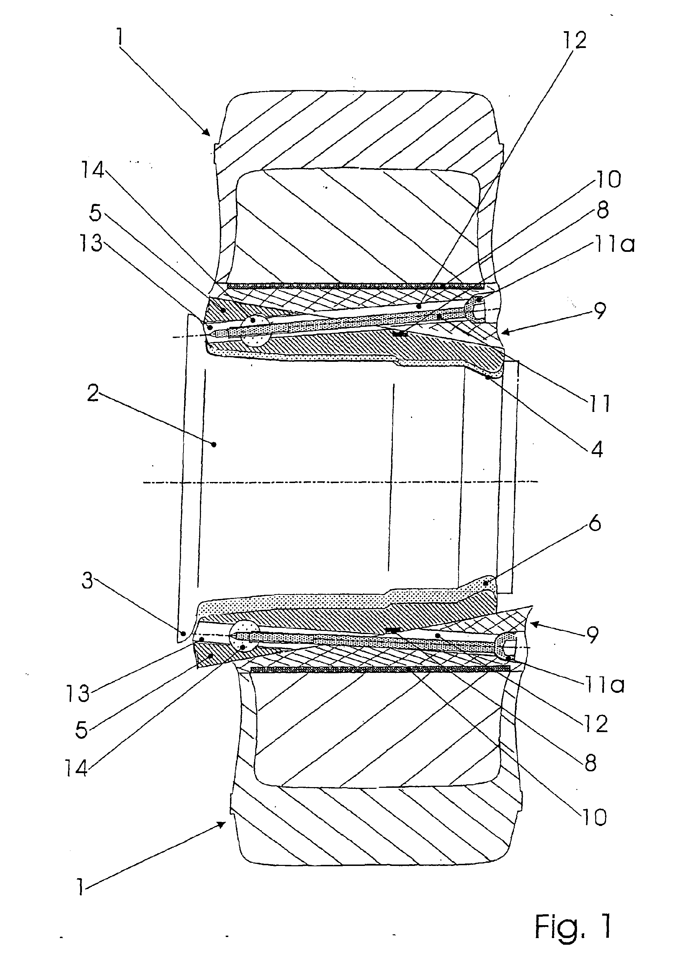

Auf der Felge 2 ist eine aus mehreren Segmenten bestehende und aus Kunststoff oder einem anderen Werkstoff gefertigte Keil - Unterschale 5 positioniert und gehalten. Die Keil - Unterschale 5 besteht aus insbesondere drei bis fünf Segmenten, die bei montiertem Vollgummireifen 1 einen geschlossenen, auf der Felge 2 sitzenden Ringkörper bilden. Die Innenseiten der Segmente der Keil - Unterschale 5 sind der äußeren Form der Sitzfläche und der Nut 4, der eine Seitenbereich ist der Innenkontur des Felgenhorns 3 angepasst. Die Innenseiten der Segmente der Keil - Unterschale 5 sind mit einer Kompressionszwischenlage 6, beispielsweise aus Moosgummi, versehen. Die untere Hälfte der Fig. 1 zeigt die Kompressionszwischenlage 6 im nicht komprimierten Zustand, die obere Hälfte zeigt die Kompressionszwischenlage 6 im komprimierten Zustand bei montiertem Vollgummireifen 1.

Zur Montage der Segmente der Keil - Unterschale 5 auf der Felge 2 wird die Felge 2 felgenhornseitig auf eine ebene Unterlage gestellt, die Segmente werden um die Außenseite der Felge 2 positioniert und in ihrer gegenseitigen Lage fixiert, beispielsweise mittels eines Haltegummis 8, welches unter Vorspannung in einer von sämtlichen Segmenten gebildeten, umlaufenden Nut eingelegt wird. Die Außenseiten der Segmente der Keil - Unterschale 5 bilden eine Keilfläche und verlaufen somit, im Querschnitt betrachtet, gegenüber der axialen Richtung schräg, sodass sich der Außendurchmesser der Keil - Unterschale 5 von der Nut 4 bis zum Felgenhorns 3 stetig vergrößert. Der von sämtlichen Segmenten der Keil - Unterschale 5 gebildete Ringkörper weist daher eine Außenfläche auf, die eine Mantelfläche eines Kegelstumpfes ist.

Das Gegenstück zur Keil - Unterschale 5 ist eine aus Kunststoff oder einem anderen Werkstoff bestehende Keil - Oberschale 9, welche an der inneren Umfangsfläche des Vollgummireifens 1 angebracht, vorzugsweise anvulkanisiert, ist. Der Vollgummireifen 1 kann einen bekannten Aufbau aufweisen und aus Gummi bzw. aus Gummi ähnlichen Werkstoffen bestehen. Um bei montiertem Reifen 1 zu verhindern, dass die auf die Keil - Oberschale 9 einwirkenden Zugspannungen die Keil - Oberschale 9 beschädigen, ist es günstig, zwischen der Keil - Oberschale 9 und dem elastischem Material des Vollgummireifens 1 eine ringartig umlaufende Verstärkung 10 mit bzw. aus metallischen Festigkeitsträgern vorzusehen. Die Verstärkungslage 10 kann auf der Außenseite der Keil - Oberschale 9 aufgebracht sein, bevor diese am Reifen 1 anvulkanisiert wird.

Die freie Innenseite der Keil - Oberschale 9 bildet eine gegengleich zur Außenseite der Keil - Unterschale 5 verlaufende Keilfläche, sodass der mit der Keil - Oberschale 9 versehene Vollgummireifen 1 auf der mit den Keil - Unterschale 5 versehenen Felge 2 aufgesetzt werden kann. Diese Lage, in welcher die Kompressionszwischenlage 6 noch nicht komprimiert ist, zeigt die untere Hälfte der Fig.1. Um den Reifen 1 in seine Endposition auf der Felge 2 zu bringen, ist das Aufbringen einer Spannung bzw. ein gegenseitiges Verspannen von Keil - Oberschale 9 und Keil - Unterschale 5 durchzuführen. Bei der dargestellten Ausführungsform erfolgt das Verspannen und gegenseitige Fixieren durch Spannschrauben 11, mittels welchen die Keil - Oberschale 9 auf die Keil - Unterschale 5 gezogen und die Kompressionszwischenlage 6 komprimiert wird.

Zu diesem Zweck sind an mehreren Stellen des Umfanges, vorzugsweise an drei bis sechs Stellen, sowohl in der Keil - Oberschale 9 als auch in der Keil - Unterschale 5 Aufnahmebohrungen 12, 13 vorgesehen, die, wenn diese Teile aus Kunststoff bestehen, bei einer Herstellung im Spritzgussverfahren mitgeformt werden können. Die gegenüber der axialer Richtung geringfügig geneigt verlaufenden Aufnahmebohrungen 12,13 für die Spannschrauben 11 weisen einen Durchmesser auf, welcher die beim Verspannen, beim Festziehen der Spannschrauben 11, in radialer Richtung erfolgende Relativbewegung der Keil - Oberschale 9 gegenüber der Keil - Unterschale 5 zulässt.

Die in der Keil - Oberschale 9 vorgesehenen Aufnahmebohrungen 12 weisen an ihrem äußeren Endbereich eine Erweiterung auf, die eine umlaufende Stützschulter zur Abstützung eines kugelig ausgeführten Bereiches des Schraubenkopfes 11a bildet. Innerhalb der in der Keil - Unterschale 5 vorgesehenen Aufnahmebohrung 13 ist jeweils eine Spannmutter 14 eingebracht, die, wenn die Keil - Unterschale 5 aus Kunststoff besteht, bei der Herstellung der Keil - Unterschale 5 umspritzt wird.

Die Spannmutter 14 weist eine ovale Form auf, die aus der Zeichnungsfigur nicht ersichtlich ist, da ein Schnitt quer zur Längserstreckung der Spannmutter 14 gezeigt ist. Jede Spannmutter 14 kann sich gegenüber ihrer Aufnahmestelle in der Keil - Unterschale 5 um eine Achse drehen, die senkrecht zur Zeichnungsebene verläuft. Wird die Keil -Unterschale 5 aus Kunststoff gefertigt, kann beim Umspritzen die Spannmutter 14 innerhalb der jeweiligen Bohrung 13 derart positioniert werden, dass ihre mit einem Innengewinde versehene Öffnung beim Einfädeln der Spannschraube 11 von der Spannschraubenspitze erfasst wird. Die Spitze jeder Spannschraube 11 ist über ein kurzes Stück bis auf den Kerndurchmesser abgedreht und daher ohne Gewinde, wobei sich an die Spitze ein längerer Gewindeabschnitt anschließt. Die eingefädelten Spannschrauben 11 werden in die das Gegenlager bildenden Spannmuttern 14 eingeschraubt, wodurch die Keil - Oberschale 9 und somit der Vollgummireifen 1 unter Zusammenpressen der Kompressionszwischenlage 6 in ihre Endpositionen auf der Felge 2 gebracht werden.

Durch die Spannschrauben 11 werden dabei die Segmente der Keil - Unterschale 5 derart fest auf die Felge 2 gepresst, dass der Reifen 1 auch bei sehr hohen Umfangs- und/oder Axialbelastungen fest auf der Felge 2 sitzt. Die Kraftübertragung kann dabei nicht nur durch Kraftschluss sondern auch durch Formschluss erfolgen, indem beispielsweise an mehreren Umfangsstellen der einen Schale 5, 9 für die andere Schale 5, 9 Nutführungen vorgesehen werden.

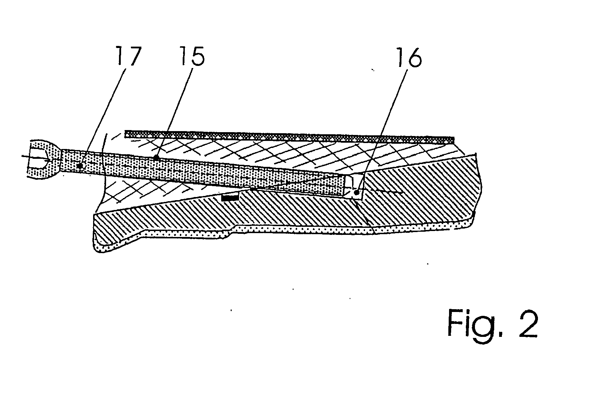

Lässt sich der Reifen 1 nach dem Entfernen der Spannschrauben 11 von Hand aus nicht von der Felge 2 bzw. der Keil - Unterschale 5 lösen, kann eine Demontagehilfe verwendet werden, die in Fig. 2 gezeigt ist. An einigen Stellen des Umfanges sind weitere miteinander fluchtende Bohrungen 15, 16 in der Keil - Oberschale 9 und in der Keil - Unterschale 5 ausgebildet. Die Bohrungen 15 in der Keil - Oberschale 9 sind mit einem Innengewinde versehen, die Bohrungen 16 in der Keil - Unterschale 5 sind gewindefreie Senkbohrungen.

In die Bohrungen 15 werden Abspannschrauben 17 eingedreht bis sie am Boden der Senkbohrungen 16 anliegen, wobei bei einem weiteren Eindrehen der Schrauben 17 ein Abdrücken der Keil - Oberschale 9 von der Keil - Unterschale 5 erfolgt.

Das gegenseitige Fixieren bzw. Verspannen von Reifen 1 und Felge 2 kann abweichend von der dargestelltem und beschriebenen Ausführungsform erfolgen. So kann beispielsweise vorgesehen werden, den Reifen 1 unter Kompression der Kompressionszwischenlage auf die Keil - Unterschale aufzudrücken und in der Endphase dieses Aufpressvorganges einen Einrastmechanismus wirken zu lassen. Selbstverständlich kann auch auf anderer Weise als mit Spannschrauben eine gegenseitige Verspannung der Keil - Oberschale mit der Keil - Unterschale erfolgen.

Bei gleich bleibender Keil - Oberschale kann die Keil - Unterschale von ihrer Ausgestaltung her an verschiedene Felgenformen angepasst werden.

## Patentansprüche

1. Fahrzeugrad mit einer Felge mit einer äußeren Sitzfläche und mit einem auf der Felge positionierten Vollgummireifen, wobei auf der Felge (2) eine aus Segmenten zusammengesetzte, am äußeren Umfang eine Keilfläche aufweisende Keil - Unterschale (5) gehalten ist, **dadurch gekennzeichnet dass** die Keil-Unterschale gegen eine eine gegengleich ausgeführte Keilfläche aufweisende Keil - Oberschale (9), die mit dem Reifen (1) fest verbunden ist, unter Komprimieren einer zwischen der Felgensitzfläche und der Innenseite der Keil - Unterschale (5) angeordneten Kompressionszwischenlage (6) verspannt ist.

2. Fahrzeugrad nach Anspruch 1, **dadurch gekennzeichnet, dass** die Keil - Unterschale (5) am äußeren Umfang der Felge (2) in Axialrichtung durch zumindest ein an der Felge (2) ausgebildetes Halteelement, beispielsweise eine Vertiefung, gehalten ist.

3. Fahrzeugrad nach Anspruch 1 oder 2, **dadurch gekennzeichnet, dass** die Segmente der Keil - Unterschale (5) einen geschlossenen Ringkörper bilden.

4. Fahrzeugrad nach einem der Ansprüche 1 bis 3, **dadurch gekennzeichnet, dass** die Segmente der Keil - Unterschale (5) vor der Montage des Reifens (1) mittels eines an ihrem äußeren Umfang positionierten Halteelementes, beispielsweise eines Haltegummis (8), an der Felge (2) gehalten sind.

5. Fahrzeugrad nach Anspruch 1, **dadurch gekennzeichnet, dass** die Keil - Oberschale (9) am Reifen (1) anvulkanisiert ist.

6. Fahrzeugrad nach Anspruch 1 oder 5, **dadurch gekennzeichnet, dass** zwischen der Keil - Oberschale (9) und dem Reifen (1) eine metallische Verstärkung (10) angeordnet ist.

7. Fahrzeugrad nach einem der Ansprüche 1 bis 6, **dadurch gekennzeichnet, dass** die Keil -Oberschale (9) mit der Keil - Unterschale (5) durch Spannschrauben (11) verbunden ist.

8. Fahrzeugrad nach Anspruch 7, **dadurch gekennzeichnet, dass** sowohl die Keil - Unterschale (5) als auch die Keil - Oberschale (9) Aufnahmebohrungen (12, 13) zur Aufnahme der Spannschrauben (11) aufweisen, deren Anordnung und Ausführung ein Einführen der Spannschrauben (11) bei nicht komprimierter Kompressionszwischenlage (6) und ein Spannen der Schrauben (11) zum Ziehen der Keil - Oberschale (9) in ihre Endposition unter Komprimieren der Zwischenlage (6) gestatten.

9. Fahrzeugrad nach Anspruch 8, **dadurch gekennzeichnet, dass** in den Aufnahmebohrungen (13) der Keil - Unterschale (5) Spannmuttern (14) eingebracht sind.

10. Fahrzeugrad nach einem der Ansprüche 1 bis 9, **dadurch gekennzeichnet, dass** in der Keil - Oberschale (9) und der Keil - Unterschale (5) weitere miteinander fluchtend angeordnete Bohrungen (15, 16) ausgebildet sind, wobei die Bohrungen (15) in der Keil - Oberschale (9) mit einem Innengewinde versehen sind und die Bohrungen (16) in der Keil - Unterschale (5) Senkbohrungen sind, so dass mittels in die Bohrungen (15, 16) eingesetzter Schrauben (17) ein Abdrücken der Keil - Oberschale (9) von der Keil - Unterschale (5) erfolgt.

11. Fahrzeugrad nach einem der Ansprüche 1 bis 10, **dadurch gekennzeichnet, dass** die Keil - Unterschale (5) und die Keil - Oberschale (9) Spritzgussteile aus Kunststoff sind.

12. Fahrzeugrad nach einem der Ansprüche 1 bis 11, **dadurch gekennzeichnet, dass** die Keil - Unterschale (5) und die Keil - Oberschale (9) miteinander auch formschlüssig, beispielsweise durch Nutführungen, verbindbar sind.

13. Fahrzeugrad nach einem der Ansprüche 1 bis 12, **dadurch gekennzeichnet, dass** die Kompressionszwischenlage (6) aus Moosgummi besteht.

## Claims

1. Vehicle wheel with a rim having an outer seating surface and a solid rubber tyre positioned on the rim, a segmented wedge lower shell (5) being held on the rim (2) and having a wedge surface on the outer circumference, **characterized in that** the wedge lower shell is braced against a wedge upper shell (9), which has an equally and oppositely formed wedge surface and is firmly connected to the tyre (1), while compressing an intermediate compression layer (6) arranged between the rim seating surface and the inner side of the wedge lower shell (5).

2. Vehicle wheel according to Claim 1, **characterized in that** the wedge lower shell (5) is held on the outer circumference of the rim (2) in the axial direction by at least one holding element formed on the rim (2), for example a depression.

3. Vehicle wheel according to Claim 1 or 2, **characterized in that** the segments of the wedge lower shell (5) form a closed annular body.

4. Vehicle wheel according to one of Claims 1 to 3, **characterized in that**, before the tyre (1) is fitted, the segments of the wedge lower shell (5) are held on the rim (2) by means of a holding element positioned on their outer circumference, for example a holding rubber (8).

5. Vehicle wheel according to Claim 1, **characterized in that** the wedge upper shell (9) is vulcanized on the tyre (1).

6. Vehicle wheel according to Claim 1 or 5, **characterized in that** a metallic reinforcement (10) is arranged between the wedge upper shell (9) and the tyre (1).

7. Vehicle wheel according to one of Claims 1 to 6, **characterized in that** the wedge upper shell (9) is connected to the wedge lower shell (5) by clamping bolts (11).

8. Vehicle wheel according to Claim 7, **characterized in that** both the wedge lower shell (5) and the wedge upper shell (9) have receiving bores (12, 13) for receiving the clamping bolts (11), the arrangement and configuration of which bores allow the clamping bolts (11) to be introduced while the intermediate compression layer (6) is not compressed and allow tightening of the bolts (11) to draw the wedge upper shell (9) into its final position while compressing the intermediate layer (6).

9. Vehicle wheel according to Claim 8, **characterized in that** clamping nuts (14) are inserted in the receiving bores (13) of the wedge lower shell (5).

10. Vehicle wheel according to one of Claims 1 to 9, **characterized in that** further bores (15, 16), arranged in line with one another, are formed in the wedge upper shell (9) and the wedge lower shell (5), the bores (15) in the wedge upper shell (9) being provided with an internal thread and the bores (16) in the wedge lower shell (5) being countersunk bores, so that bolts (17) inserted into the bores (15, 16) have the effect that the wedge upper shell (9) is pressed away from the wedge lower shell (5).

11. Vehicle wheel according to one of Claims 1 to 10, **characterized in that** the wedge lower shell (5) and the wedge upper shell (9) are injection-moulded parts of plastic.

12. Vehicle wheel according to one of Claims 1 to 11, **characterized in that** the wedge lower shell (5) and the wedge upper shell (9) can also be connected to each other with a form fit, for example by groove guides.

13. Vehicle wheel according to one of Claims 1 to 12, **characterized in that** the intermediate compression layer (6) consists of microcellular rubber.

## Revendications

1. Roue de véhicule avec une jante comprenant une surface d'appui extérieure et avec un bandage solide positionné sur la jante,
une coque inférieure en coin (5), constituée de segments et présentant sur sa périphérie extérieure une surface en forme de coin étant maintenue sur la jante (2), contre laquelle une coque supérieure en coin (9) présentant une surface en forme de coin réalisée de manière identique et opposée, qui est connectée au bandage (1), est serrée par compression d'une couche intermédiaire de compression (6) disposée entre la surface d'appui de la jante et le côté intérieur de la coque inférieure en coin (5).

2. Roue de véhicule selon la revendication 1, **caractérisée en ce que** la coque inférieure en coin (5) est maintenue sur la périphérie extérieure de la jante (2) dans la direction axiale par au moins un élément de fixation réalisé sur la jante (2), par exemple un renfoncement.

3. Roue de véhicule selon la revendication 1 ou 2, **caractérisée en ce que** les segments de la coque inférieure en coin (5) forment un corps annulaire fermé.

4. Roue de véhicule selon l'une quelconque des revendications 1 à 3, **caractérisée en ce que** les segments de la coque inférieure en coin (5), avant le montage du bandage (1), sont maintenus sur la jante (2) au moyen d'un élément de fixation positionné sur sa périphérie extérieure, par exemple un caoutchouc de retenue (8).

5. Roue de véhicule selon la revendication 1, **caractérisée en ce que** la coque supérieure en coin (9) est vulcanisée sur le bandage (1).

6. Roue de véhicule selon la revendication 1 ou 5, **caractérisée en ce qu'**un renfort métallique (10) est disposé entre la coque supérieure en coin (9) et le bandage (1).

7. Roue de véhicule selon l'une quelconque des revendications 1 à 6, **caractérisée en ce que** la coque supérieure en coin (9) est connectée à la coque inférieure en coin (5) par des vis de serrage (11).

8. Roue de véhicule selon la revendication 7, **caractérisée en ce que** la coque inférieure en coin (5) ainsi que la coque supérieure en coin (9) présentent des alésages de réception (12, 13) pour recevoir les vis de serrage (11), dont l'agencement et la réalisation autorisent l'insertion des vis de serrage (11) lorsque la couche intermédiaire de compression (6) n'est pas comprimée et un serrage des vis (11) pour tirer la coque supérieure en coin (9) dans sa position finale et comprimer la couche intermédiaire (6).

9. Roue de véhicule selon la revendication 8, **caractérisée en ce que** des écrous de serrage (14) sont introduits dans les alésages de réception (13) de la coque inférieure en coin (5).

10. Roue de véhicule selon l'une quelconque des revendications 1 à 9, **caractérisée en ce que** d'autres alésages disposés en affleurement les uns avec les autres (15, 16) sont réalisés dans la coque supérieure en coin (9) et la coque inférieure en coin (5), les alésages (15) dans la coque supérieure en coin (9) étant pourvus d'un filetage interne et les alésages (16) dans la coque inférieure en coin (5) étant des alésages borgnes, de sorte qu'au moyen de vis (17) insérées dans les alésages (15, 16), il se produise une compression de la coque supérieure en coin (9) par la coque inférieure en coin (5).

11. Roue de véhicule selon l'une quelconque des revendications 1 à 10, **caractérisée en ce que** la coque inférieure en coin (5) et la coque supérieure en coin (9) sont des pièces moulées par injection de plastique.

12. Roue de véhicule selon l'une quelconque des revendications 1 à 11, **caractérisée en ce que** la coque inférieure en coin (5) et la coque supérieure en coin (9) peuvent être connectées l'une à l'autre également par engagement par coopération de forme, par exemple par des guides à rainures.

13. Roue de véhicule selon l'une quelconque des revendications 1 à 12, **caractérisée en ce que** la couche intermédiaire de compression (6) se compose de caoutchouc cellulaire.
